## Europäisches Patentamt

## European Patent Office

## Office européen des brevets

(11) Veröffentlichungsnummer: **0 038 281**
A2

(12) # EUROPÄISCHE PATENTANMELDUNG

(21) Anmeldenummer: 81710015.9

(22) Anmeldetag: 11.04.81

(51) Int. Cl.³: **C 03 C 17/23**, C 08 J 7/06, G 02 B 1/10, B 05 D 5/08

(30) Priorität: 16.04.80 DE 3014597

(43) Veröffentlichungstag der Anmeldung: 21.10.81 **Patentblatt 81/42**

(84) Benannte Vertragsstaaten: **AT CH FR GB IT LI NL SE**

(71) Anmelder: **Firma Carl Zeiss, Postfach 1369/1380, D-7082 Oberkochen (DE)**

(72) Erfinder: **Dobler, Hermann R., Dr., Zeppelinstrasse 25, D-7080 Aalen (DE)**

(54) Verfahren zur Änderung der Reflexionseigenschaften von Oberflächen.

(57) Mit dem Verfahren werden die zu behandelnden Oberflächen (1) vor der eigentlichen Ver- oder Entspiegelung geglättet, wodurch Kratzer, Schleifspuren usw. beseitigt werden. Dazu wird der betr. Gegenstand (5) mit einer Tauchschicht (2) in einem Polysiloxanbad versehen, die Unebenheiten ausfüllt. Nach anschließendem Trocknen und evtl. Waschen im Ultraschallbad folgt das Aufdampfen der z. B. Entspiegelungsschicht (3) unter Vakuum. Während der Bedampfung wird das Substrat bei Temperaturen von ca. 400° getempert, wodurch auch die Polysiloxanschicht (3) gehärtet wird. Ein separates Härten der Siloxanschicht (3) vor der Vakuumbeschichtung ist daher nicht nötig.

Verfahren zur Änderung der Reflexionseigenschaften von Oberflächen

Die Erfindung betrifft ein Verfahren zur Änderung der Reflexionseigenschaften von Oberflächen optischer Teile wie Linsen, Prismen, Filter und dergleichen, indem diese mit einer spiegelnden oder entspiegelnden Schicht überzogen werden.

Bei der Herstellung solcher Schichten, deren optische Wirkung auf der Interferenzeigenschaft des Lichtes beruht, auf Glas oder Kunststoff wird eine möglichst ebene, fehlerfreie Oberfläche des Substrats gefordert. Oberflächenfehler, beispielsweise die Restrauhigkeit einer ungenügend polierten Fläche treten nach der Beschichtung, die in der Regel durch Aufdampfen von mehreren Schichten aus Materialien mit unterschiedl. Brechungsindices erfolgt, insbesondere in den Grenzfällen sehr hoher und sehr niedriger Reflexion deutlicher zutage als bei unbeschichteten Oberflächen. Deshalb werden z.B. Brillenlinsen vor der Entspiegelung einem speziellen Poliervorgang unterworfen, um die für normale d.h. unbeschichtete Anwendungen ausreichende Oberflächenqualität der Linse zu verbessern. Der zusätzliche mechanische Poliervorgang trägt zu einem nicht unerheblichen Teil zu dem relativ hohen Herstellungsaufwand für solche Linsen bei.

Aus dem DE-GM 67 53 055 ist es bekannt, optische Teile aus unbeständigem Glas durch Tauchen in eine Lösung eines Kieselsäureesters und anschließendes Härten mit einer Schutzschicht aus im wesentlichen Siliziumdioxyd zu versehen. Als oberste Schicht auf einem Glas mit höherem Brechungsindex vermag die Tauchschicht bei geeignet ausgelegter Stärke entspiegelnd zu wirken.

Es ist die Aufgabe der vorliegenden Erfindung, ein Verfahren zur reflexändernden Beschichtung von optischen Teilen anzugeben, mit dem sich bei geringem mechanischen Einsatz möglichst glatte und fehlerfreie Oberflächen erzielen lassen.

Diese Aufgabe wird gemäß dem kennzeichnenden Teil des Hauptanspruches dadurch gelöst, daß

- 2 -

0038281

a) das aus chem. beständigem Material bestehende Substrat unter Auslassung zumindest des üblichen Feinpolierganges zunächst mit einer Siliziumdioxyd enthaltenden Flüssigkeitsschicht in einer Stärke zwischen 0,1 µ, und 5µm überzogen wird,

b) diese Schicht verfestigt wird und daß

c) anschließend eine reflexändernde Schicht in bekannter Weise aufgebracht wird.

Der vor der eigentlichen Beschichtung üblicherweise durchgeführte, eigentliche Poliervorgang wird nach der Erfindung durch das Überziehen des feingefrästen, geschliffenen oder nur grobpolierten optischen Teils mit einer handelsüblichen, Siliziumdioxyd enthaltenden Flüssigkeitsschicht und anschließender Verfestigung der Schicht ersetzt. Es wurde gefunden, daß derartige Schichten im Gegensatz zu solchen, die im Vakuum aufgedampft werden, Oberflächenfehler des Substrats wie Kratzer, Schleifspuren etc. glättend ausfüllen, wenn die Oberflächenfehler nicht zu groß sind. Eine solche im wesentlichen aus Siliziumdioxyd bestehende Schicht ist darüberhinaus sehr hart und abriebfest, meist härter als das Substrat, und bietet der darauf in bekannter Weise aufzubringenden Spiegelschicht oder Entspiegelungsschicht eine dauerhafte, glatte und haftfeste Unterlage. Die Schicht soll jedoch nicht stärker als 5 µm sein, da es andernfalls sehr schwierig ist, eine gleichmäßige Schichtdicke auf der Substratoberfläche zu erzielen. Eine ungleichmäßige Schicht, deren Welligkeit im µ-Bereich liegt, wirkt sich jedoch äußerst nachteilig auf die optischen Eigenschaften des betreffenden Bauteils aus.

Da z.B. Brillenlinsen vor dem Aufbringen der Entspiegelungsschicht einzeln mit einem auf die Form der Oberfläche abgestimmten Werkzeug poliert werden mußten, nach dem erfindungsgemäßen Verfahren aber größere Mengen von Linsen in einem Tauchvorgang beschichtet werden können, wird eine erhebliche Vereinfachung des Produktionsprozesses erzielt. Besondere Vorteile ergeben sich für die Vergütung von Asphären, die nach ihrer Herstellung durch z.B. Blankpressen oder Gießen nicht mehr poliert werden können, wenn die Form der Asphären nicht verändert werden soll. Hier ist das Überziehen mit einer sich der asphärischen

Form des Substrats anpassenden Siliziumdioxydschicht die zweckmäßigste Lösung, um Oberflächenfehler vor der anschließenden Entspiegelung zu beseitigen.

Das Verfahren kann z.B. mit Vorteil bei der Entspiegelung von Brillenlinsen verwendet werden. Auf Glas mit niedriger Brechzahl aufgebracht ist die optische Wirkung der ebenfalls niedrig brechenden Siliziumdioxydschicht nahezu unabhängig von ihrer Dicke sehr gering, so daß die auf das Grundglas optimierten, üblichen Entspiegelungsschichten, am besten gut entspiegelnde Mehrfachschichten unter Beibehaltung der Verfahrensparameter nach dem Verfestigen der Flüssigkeitsschicht in bekannter Weise aufgedampft werden können.

Beim Entspiegeln von höherbrechenden Glasteilen kann die Siliziumdioxydschicht selbst entspiegelnd wirken. Sie wird dazu zweckmäßig in einer Dicke zwischen 0,1 µm und 0,5 µm unter Berücksichtigung der gewünschten Entspiegelungswirkung der Gesamtschicht aufgebracht wobei der exakte Wert in Verbindung mit den Dicken der anschließend aufzudampfenden Schichten zu ermitteln ist.

Auf eine separate von den Herstellern der im Handel erhältlichen Tauchbäder vorgeschriebene Temperaturbehandlung zum Aushärten der Flüssigkeitsschicht bei Temperaturen zwischen 200 °C und 450 °C kann in der Regel verzichtet werden, da die bekannten Verfahren, nach denen Entspiegelungsschichten auf Glas aufgedampft werden, ohnehin ein Aufheizen des Substrats vorsehen. Es wurde gefunden, daß selbst ein nachträgliches Tempern der Teile nach Abschluß der Bedampfung zur Aushärtung der Flüssigkeitsschicht führt. Insbesondere, wenn die auf diese Schicht folgende erste Teilschicht der Entspiegelungsschicht aus Oxyden von Tantal, Cer, Lanthan, Praseodym, Titan, Zirkon oder Silizium besteht, ergibt sich auch ohne eine Härtung vor der Bedampfung ein sehr haftfester Belag, der sich selbst mit einem Stahlgriffel nicht ritzen läßt.

Zur Beschichtung von Kunststofflinsen, deren Brechzahl sich meist kaum von der von Siliziumdioxyd unterscheidet, kann eine mehrere µm-starke Tauchschicht aufgetragen werden, die neben einer glatten Oberfläche eine harte Grundlage für die darauf aufzubringende Entspiegelungs-

schicht liefert. Nach diesem Verfahren können auch relativ weiche Kunststoffmaterialien beschichtet werden, aus denen sich Linsen in großen Stückzahlen spritzen. lassen. Bisher war es üblich, Plastiklinsen für ophthalmologische Zwecke in einem relativ aufwendigen Prozeß aus Hartplastik zu gießen.

Die Härtung der Flüssigkeitsschicht (Polysiloxanschicht) durch Erhitzen auf Temperaturen von etwa 400 °C scheidet bei der Beschichtung von Kunststoffen aus. Hier hat es sich als zweckmäßig und selbst für ophthalmologische Anwendungen mehr als ausreichend erwiesen, die Verfestigung bei niedrigen und für das Substrat unschädlichen Temperaturen über einen längeren Zeitraum mit Hilfe von elektromagnetischer, vorzugsweise ultravioletter oder infraroter Strahlung vorzunehmen, durch die Polykondensation der Siloxanschicht beschleunigt wird.

Das erfindungsgemäße Verfahren ist jedoch nicht auf das Entspiegeln transparenter Teile beschränkt. Auch bei der Herstellung von hochwertigen Spiegeln oder Interferenzfiltern ist eine möglichst fehlerfreie Substratoberfläche, auf die Filterschichten aufzubringen sind, Voraussetzung. Mit dem Verfahren lassen sich für alle bekannten optisch wirksamen und damit reflexändernden Beschichtungen Verbesserungen der Oberflächenstruktur erzielen und die Effektivität des Herstellungsprozesses steigern.

Anhand des nachfolgend angeführten Beispiels und der Fig. 1-2 der beigefügten Zeichnungen wird der Erfindungsgegenstand näher erläutert:

Fig. 1  zeigt die Oberfläche einer gemäß Beispiel 1 beschichteten Brillenlinse als Skizze nach einer mikrophotographischen Aufnahme;

Fig. 2a stellen jeweils eine Prinzipskizze eines Schnittes durch die
und b    Brillenlinse in den mit 1a und 1b bezeichneten Bereichen der Fig. 1 dar.

Beispiel Eine feingefräste Brillenlinse aus Glas mit einem *Brechu*ngsindex von $n_d$ = 1,53 wurde nach erfolgtem groben Polieren zur Hälfte in ein Siliziumdioxyd-Tauchbad eingetaucht, das unter der Art. Nr. 11675 von der Fa. Merck vertrieben wird. Das Tauchbad enthielt Verdünner des gleichen Herstellers im Verhältnis Tauchbad/Verdünner = 2/3.

Anschließend wurde das Glas mit einer Ziehgeschwindigkeit von 10cm/-Minute aus der Flüssigkeit gezogen und in einem senkrechten, laminaren Luftstrom ca. eine Minute lang getrocknet. In dieser Zeit hatte sich die Tauchschicht bereits soweit verfestigt, daß die Brillenlinse im Ultraschallbad gewaschen werden konnte.

Nach dem Waschen wurde das Glas für 1 Stunde in einen mit 90° beheizten Umluftofen gelegt und schließlich durch Vakuumbedampfung mit einem herkömmlichen Mehrfachentspiegelungsbelag versehen. Im Zuge des Bedampfungsverfahrens wurde die Brillenlinse längere Zeit Temperaturen von etwa 400 °C ausgesetzt.

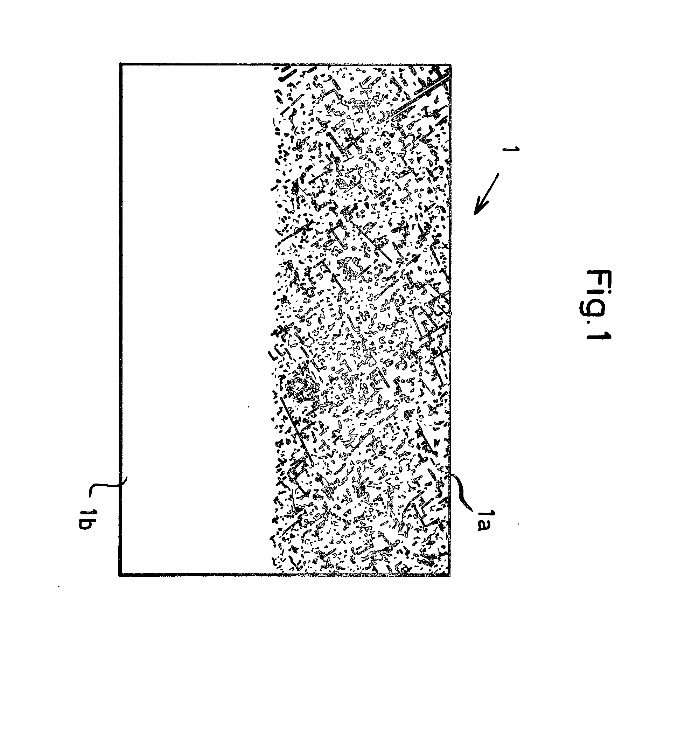

Das so erhaltene Endprodukt besaß bei streifendem Lichteinfll schon mit bloßem Auge feststellbar ein deutlich verbessertes Streulichtverhalten in dem mit der Tauchschicht versehenen Bereich der Brillenlinse. Eine mikrophotographische Aufnahme der Oberfläche der Linse mit Dunkelfeldbeleuchtung und 50-facher Gesamtvergrößerung im Bereich der Trennlinie zwischen dem getauchten und nicht getauchten Bereich der Linse ergab das in der Fig. 1 skizzierte Bild:

Im oberen, nicht mit der Tauchschicht versehenen Teil 1a der Oberfläche 1 der Brillenlinse treten die Bearbeitungsspuren des Schleifwerkzeugs als mehrere µm-starke Kratzer deutlich in Erscheinung. Im unteren, getauchten Bereich 1b sind lediglich einige punktförmige Schmutzpartikel zu erkennen. Die stark streuenden Schleifspuren sind dagegen völlig beseitigt.

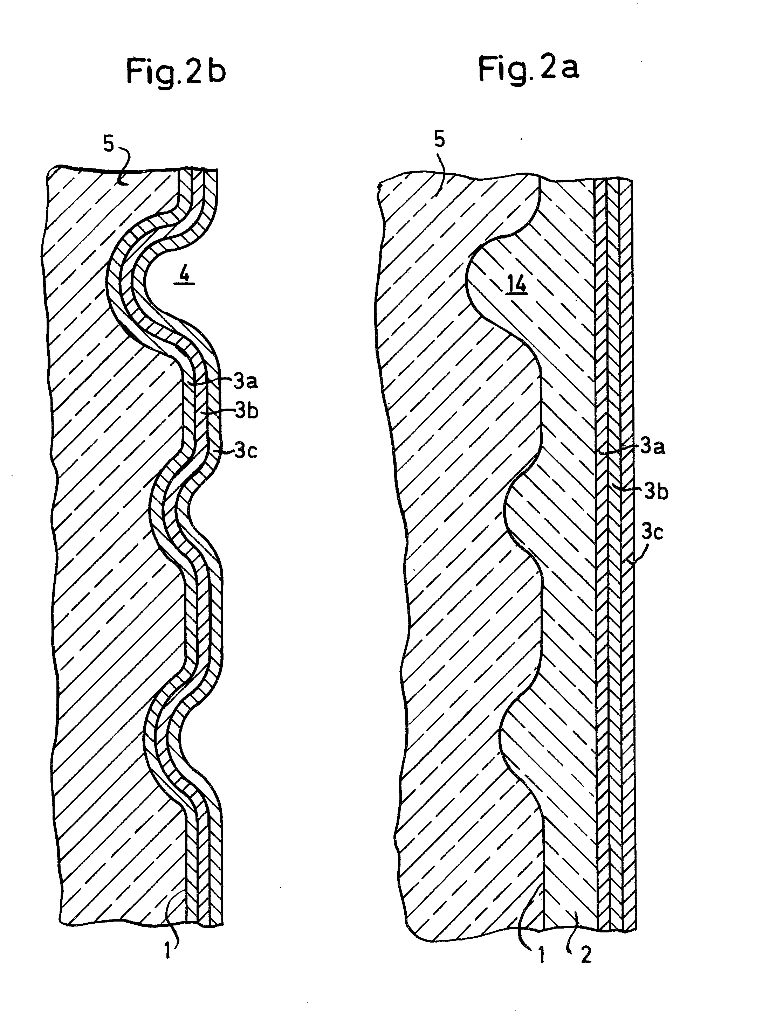

Offensichtlich sind die Schleifspuren 4 wie in Fig. 2a skizziert vollständig von der auf die Oberfläche 1 des Glassubstrats 5 aufgebrachten Siliziumdioxydschicht 2 ausgefüllt, die mit etwa $n_d$ = 1,47 nahezu den gleichen Brechungsindex wie das Grundglas ($n_d$ = 1,52) besitzt. Der darauf aufgebrachte dreischichtige Entspiegelungsbelag 3 findet somit eine glatte Oberfläche vor.

Auf das ungetauchte Substrat schlagen sich wie Fig. 2b zeigt die Entspiegelungsschichten 3a,b und c dagegen in gleichmäßiger Dicke den Vertiefungen 4 in der Oberfläche 1 des Substrats 5 folgend nieder. Die als Streuzentren wirkenden Schleifspuren bleiben sichtbar und treten sogar wegen der im Vergleich zu nicht entspiegelten Gläsern verminderten Gesamtreflexion deutlicher hervor.

Patentansprüche:

1. Verfahren zur Änderung der Reflexionseigenschaften von Oberflächen optischer Teile, dadurch gekennzeichnet, daß

a) das aus chem. beständigem Material bestehende Substrat (1) unter Auslassung zumindest des üblichen Feinpolierganges zunächst mit einer Siliziumdioxyd enthaltenden Flüssigkeitsschicht (2) in einer Stärke zwischen 0,1 μm und 5 μm überzogen wird,

b) diese Schicht (2) verfestigt wird und daß

c) anschließend eine reflexändernde Schicht (3) in bekannter Weise aufgebracht wird.

2. Verfahren nach Anspruch 1, dadurch gekennzeichnet, daß vor, während oder nach dem Aufbringen der reflexändernden Schicht (3) die Siliziumdioxyd enthaltende Schicht (2) aufgeheizt wird.

3. Verfahren nach Anspruch 2, dadurch gekennzeichnet, daß die Schichten auf ein Substrat mit asphärischer Oberfläche aufgebracht werden.

4. Verfahren nach Anspruch 1-3, dadurch gekennzeichnet, daß die reflexändernde Schicht (3) aufgedampft wird.

5. Verfahren nach Anspruch 4, dadurch gekennzeichnet, daß eine entspiegelnde Mehrfachschicht (3) aus Materialien (3a,3b,3c) unterschiedlicher Brechungsindices aufgedampft wird.

6. Verfahren nach Anspruch 5, dadurch gekennzeichnet, daß die erste auf die Tauchschicht (2) aufzubringende Teilschicht (3a) der Entspiegelungsschicht (3) Oxyde von Tantal, Cer, Lanthan, Praseodym, Titan, Zirkon oder Silizium enthält.

7. Verfahren nach Anspruch 1-6, dadurch gekennzeichnet, daß das mit der verfestigten Flüssigkeitsschicht (2) versehene optische Teil vor dem Aufbringen der Entspiegelungsschicht (3) im Ultraschallbad gewaschen wird.

8. Verfahren nach Anspruch 1-7, dadurch gekennzeichnet, daß die Flüssigkeitsschicht (2) auf Substrate (1) aus Glas mit hohem Brechungsindex in einer Stärke zwischen 0,1 μm und 0,5 μm aufgebracht wird.

9. Verfahren nach Anspruch 2-8, dadurch gekennzeichnet, daß die Flüssigkeitsschicht (2) bei Temperaturen zwischen 200° C und 450° C ausgehärtet wird.

10. Verfahren nach Anspruch 1-7, dadurch gekennzeichnet, daß die Flüssigkeitsschicht (2) auf Substrate (1) aus Kunststoff in einer Stärke zwischen 1 μm und 5μm aufgebracht wird.

11. Verfahren nach Anspruch 1-10, dadurch gekennzeichnet, daß die Aushärtung der Flüssigkeitsschicht unter Verwendung von elektromagnetischer Strahlung erfolgt, mit der das optische Teil beaufschlagt wird.

12. Nach einem Verfahren gemäß Anspruch 1-11 hergestelltes optisches Element, dadurch gekennzeichnet, daß es aus einem Substrat (1) besteht, dessen Oberflächenrauhigkeit durch eine über das Substrat (1) gelegte Schicht (2) geglättet ist, die im wesentlichen aus Siliziumdioxyd besteht, und die Siliziumdioxydschicht (2) mit mindestens einer weiteren reflexändernden Schicht (3) belegt ist.

13. Optisches Element nach Anspruch 12, dadurch gekennzeichnet, daß das Substrat die Form einer Brillenlinse besitzt.

14. Optisches Element nach Anspruch 12, dadurch gekennzeichnet, daß das Substrat eine asphärische Oberfläche besitzt.

## Fig.1

**Fig.2b**

**Fig.2a**